(19) Europäisches Patentamt
European Patent Office
Office européen des brevets

(11) Numéro de publication : 0 298 877 B1

(12) # FASCICULE DE BREVET EUROPEEN

(45) Date de publication du fascicule du brevet : **04.09.91 Bulletin 91/36**

(51) Int. Cl.[5] : **C07F 7/22**, C08K 5/57, C08L 83/04

(21) Numéro de dépôt : **88420217.7**

(22) Date de dépôt : **23.06.88**

(54) **Catalyseur à l'étain obtenu à partir d'oxyde d'étain et de composé Beta-Dicarbonyle pour composition élastomère silicone.**

(30) Priorité : **25.06.87 FR 8709178**

(43) Date de publication de la demande : **11.01.89 Bulletin 89/02**

(45) Mention de la délivrance du brevet : **04.09.91 Bulletin 91/36**

(84) Etats contractants désignés : **AT BE CH DE ES FR GB GR IT LI LU NL SE**

(56) Documents cités :
**EP-A- 147 323**
**EP-A- 299 883**
**US-A- 4 873 305**
**CHEMICAL ABSTRACTS, vol. 82, no. 1, 6 janvier 1975, page 382, résumé no. 4378v, Columbus, Ohio, US; S. GOPINATHAN et al.: "Chelated halides, alkyls, and aryls of tin (IV)", & INDIAN. J. CHEM. 1974, 12(6), 626-8**

(56) Documents cités :
**CHEMICAL ABSTRACTS, vol. 82, no. 21, 26 mai 1975, page 643, résumé no. 140265h, Columbus, Ohio, US; S. GOPINATHAN et al.: "Sulfur dioxide insertion compounds of organotin complexes", & INDIAN J. CHEM. 1975, 13(1), 78-80**
**JOURNAL OF ORGANOMETALLIC CHEMISTRY, vol. 185, 1980, pages 209-217, Elsevier Sequoia S.A., Lausanne, CH; R. RUPANI et al.: "Synthesis, reactions and spectroscopic properties of some diorganotin oximates"**

(73) Titulaire : **RHONE-POULENC CHIMIE**
**25, quai Paul Doumer**
**F-92408 Courbevoie Cédex (FR)**

(72) Inventeur : **Cavezzan, Jacques**
**Résidence du Parc Tête d'Or Allée Marcel Achard**
**F-69100 Villeurbanne (FR)**
Inventeur : **Frances, Jean-Marc**
**9, avenue Condorcet**
**F-69100 Villeurbanne (FR)**
Inventeur : **Millet, Claude**
**14, rue Jean de la Bruyère**
**F-69800 Saint-Priest (FR)**

(74) Mandataire : **Seugnet, Jean Louis et al**
**RHONE-POULENC INTERSERVICES Service Brevets Chimie Centre de Recherches des Carrières B.P. 62**
**F-69192 Saint-Fons Cédex (FR)**

**EP 0 298 877 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

De nombreux composés de l'étain ont déjà été proposés comme catalyseur de réticulation de compositions polyorganosiloxanes et en particulier de compositions RTV (compositions vulcanisables à température ambiante) à un seul ou à deux emballages autrement dit mono ou bi-composantes.

Les composés les plus utilisés son les carboxylates d'étain tels que le monooléate de tributylétain, l'éthyl-2 hexanoate d'étain ou les dicarboxylates de dialkylétain tels que le dilaurate de dibutylétain et le diacétate de dibutylétain (voir l'ouvrage de NOLL "Chemistry and Technology of Silicones" page 337, Academic Press, 1968-2ème édition).

Selon le brevet US-A-3186963, on propose comme catalyseur à l'étain le produit de la réaction d'un dialkyldialcoxysilane sur un carboxylate de dialkylétain.

Selon le brevet belge BE-A-842305, on propose comme catalyseur le produit de la réaction d'un silicate d'alkyle ou d'un alkyltrialcoxysilane sur le diacétate de dibutylétain.

Selon le brevet US-A-3708467 on décrit un système catalytique formé d'un mélange de certains sels d'étain avec un chelate de titane spécifique, dans une composition mono-composante.

Enfin dans les brevets US-A-4517337 et US-A-4554310 on décrit l'utilisation de bis(β-dicétone) de diorganoétain pour la réticulation de compositions mono-composantes neutres (US-A-4517337 et US-A-4554310) ou pour des compositions mono- et bi-composantes (EP-A-147323).

Bien que EP-A-147323 ait permis de faire un progrès important dans la recherche d'un catalyseur à l'étain utilisable à la fois pour les compositions mono- et bi-composantes, il est apparu que les bis(β-dicétonate) de diorganoétain présentent un temps de prise à coeur un peu lent en particulier pour les compositions bi-composantes.

De façon générale pour les compositions mono-composantes se pose essentiellement le problème de la stabilité au stockage et de la conservation des propriétés physico-chimiques (extrudabilité, coulabilité, temps de prise) de la composition et conservation de ces mêmes propriétés du réticulat (propriétés mécaniques, dureté, allongement, résistance à la déchirure, adhérence, etc....).

L'homme de métier recherche un catalyseur qui réticule très rapidement à l'humidité de l'air et en surface mais qui procure en même temps une réticulation à coeur la plus complète possible, et qui soit actif à faible dose tout en minimisant les réactions de dégradation du réticulat, inhérentes à la présence d'étain.

Pour les compositions bi-composantes il existe les mêmes problèmes que pour les compositions mono-composantes au niveau du réticulat obtenu, mais en outre le temps de mise en oeuvre, c'est-à-dire le temps pendant lequel la composition peut être utilisée après mélange sans durcir, doit être suffisamment long pour permettre son utilisation mais suffisamment court pour obtenir un objet moulé manipulable au plus tard 24 heures après sa fabrication.

Ce catalyseur doit donc permettre d'obtenir un bon compromis entre le temps d'utilisation du mélange catalysé et le temps au bout duquel l'objet moulé est manipulable. En outre le catalyseur doit conférer au mélange catalysé un temps d'étalement qui ne varie pas en fonction de la durée au stockage.

Un but de la présente invention, en vue de rationaliser la production industrielle des compositions élastomères organopolysiloxane mono-et bi-composantes est de proposer un système catalytique utilisable à la fois dans la réticulation des compositions élastomères mono- et bi-composantes.

Un autre but de la présente invention est de proposer un système catalytique du type ci-dessus qui réponde à la fois aux contraintes communes de conservation, de mise en oeuvre et de réticulation des deux types de compositions élastomères tout en répondant aux problèmes spécifiques posés par chacune d'elle sans pour cela introduire des effets secondaires néfastes au niveau de chacune d'elle.

Ces buts et d'autres sont atteints par la présente invention qui concerne en effet une composition organopolysiloxane comprenant d'une part une base silicone apte à durcir par réaction de polycondensation en un élastomère dès la température ambiante et d'autre part une quantité catalytiquement efficace d'un mono-chelate d'étain de valence IV pentacoordiné de formule :

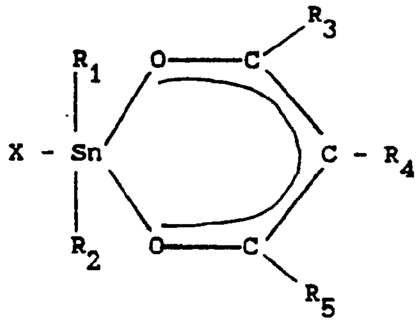

(1)

dans laquelle : les symboles $R_1$ et $R_2$, identiques ou différents, représentent des radicaux organiques monovalents hydrocarbonés en $C_1$-$C_{18}$, éventuellement substitués.

Ces radicaux organiques englobent plus spécialement :

— les radicaux alkyles, halogénés ou non, en $C_1$-$C_{18}$ tels que les radicaux méthyle, éthyle, propyle, isopropyle, butyle, isobutyle, butyle secondaire, tertiobutyle, pentyle, hexyle, heptyle, éthyl-2 hexyle, octyle, décyle, dodécyle, octadécyle, chlorométhyle, dichloro-2,5 éthyle.

— les radicaux alcényles en $C_2$-$C_{18}$, halogénés ou non, tels que les radicaux vinyle, allyle, méthallyle, butène-2 yle, pentène-2yle, octène-3 yle, fluoro-5 pentène-2 yle, pentadécényle.

— les radicaux cycloalkyles halogénés ou non en $C_4$-$C_{10}$, tels que les radicaux cyclopentyle, cyclohexyle, méthylcyclohexyle, cyclooctyle, 3-4 dichlorocyclohexyle, 2,6 dibromocycloheptyle.

— les radicaux aryles mononucléaires, halogénés ou non, en $C_6$-$C_{15}$ tels que les radicaux phényle, tolyle, xylyle, cumenyle, chlorophényle, dichlorophényle, trichlorophényle, difluorophényle, trifluorométhylphényle.

— les radicaux arylalkyles mononucléaires, halogénés ou non, en $C_7$-$C_{15}$, tels que les radicaux phényle, phényléthyle, phénylpropyle, trifluorométhylphényl-éthyle.

Les symboles $R_3$ et $R_5$, identiques ou différents, ont la même signification que $R_1$ et $R_2$ c'est-à-dire des radicaux organiques hydrocarbonés monovalents éventuellement substitués en $C_1$-$C_{18}$ et peuvent représenter en outre des atomes d'hydrogène, des radicaux cyanoalkyle ayant la partie alkyle en $C_2$-$C_4$, des radicaux alcoxy en $C_1$-$C_5$, des radicaux silyle $-Si(R_1)_3$.

A titre illustratif de radicaux cyanoalkyles, peuvent être cités les radicaux cyanoéthyle, cyanopropyle, cyanobutyle, et de radicaux alcoxy peuvent être cités les radicaux éthoxy, propoxy.

Le symbole $R_4$ représente l'atome d'hydrogène, un radical hydrocarboné éventuellement halogéné en $C_1$-$C_8$.

Ce radical englobe plus spécialement les radicaux alkyles, halogénés ou non, tels que les radicaux méthyle, éthyle, propyle, butyle, hexyle, octyle, et les radicaux aryles mononucléaires, halogénés ou non tels que les radicaux phényle, tolyle, chlorophényle, dichlorophényle.

En outre $R_4$, en se couplant avec $R_5$, forme avec $R_5$ un radical hydrocarboné cyclique divalent en $C_5$-$C_{12}$, substitué ou non par des radicaux chloro, nitro, cyano.

A titre illustratif de ces cycles peuvent être cités ceux de formules :

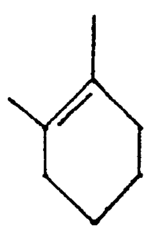

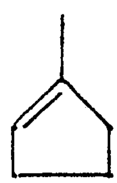

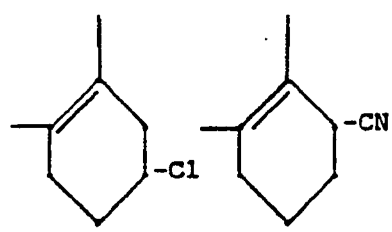

Le symbole X est un radical mono-carboxylate de formule $R_6$ COO dans laquelle le symbole $R_6$ a la même signification que le symbole $R_1$ ci-dessus et représente de préférence un radical alkyle linéaire ou ramifié en $C_1$-$C_{18}$.

A la connaissance de la demanderesse, les mono-chélates de formule (1) sont des produits nouveaux.

Ces mono-chélates peuvent être identifiés par les techniques analytiques de spectroscopie R.M.N. (raisonnance magnétique nucléaire $^{119}Sn$ ; $^{13}C$ et $^{1}H$) ainsi que par spectroscopie de masse et par la mesure de l'effet MOSSBAUER.

Il s'avère toutefois qu'en l'état actuel des connaissances des techniques analytiques, la méthode analytique R.M.N $^{119}Sn$, telle que décrite, en particulier dans l'article de Peter J. SMITH "CHEMICAL SHIFTS OF $^{119}Sn$ NUCLEI IN ORGANOTIN COMPOUNDS", page 291 et suivantes, publié dans ANNUAL REPORTS ON NMR SPECTROSCOPY, Volume 8, 1978 ACADEMIC PRESS, est une méthode qui est à elle seule suffisamment précise pour caractériser les différents composés de l'étain présents au sein d'un mélange, en particulier d'un mélange réactionnel, et pour permettre de trouver les formules chimiques de la plupart de ces composés.

Le paramètre fondamental évalué par la R.M.N.$^{119}Sn$ est la valeur du déplacement chimique exprimé en partie par million (ppm) relatif à une référence (généralement le tétraméthylétain).

La valeur du déplacement chimique est notamment sensible à l'électronégativité des groupements portés par l'étain et à la variation du nombre de coordinance de l'atome d'étain. Des travaux spécifiques de caractérisation de dérivés organnostanniques à partir de la R.M.N.$^{119}$ Sn sont notamment décrites par A.G. DAVIES et P.J. SMITH, COMPREHENSIVE ORGANO-METALLIC CHEMISTRY 11 TIN, page 523 à 529 et par J. OTERA J. OF. ORGANOMET. CHEM. 221, pages 57-61 (1981).

Ces mono-chélates sont obtenus par réaction d'un oxyde d'étain de formule :

$$R_1R_2SnO \quad (2)$$

d'un composé β-dicarbonyle de formule :

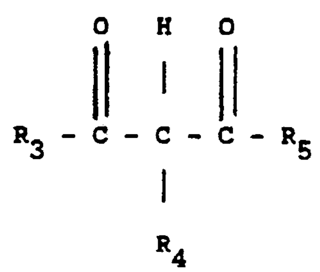

(3)

symbolisée par la suite sous la formule simplifiée CH et d'un acide organique ou minéral de formule :

$$XH \quad (4)$$

formules dans lesquelles $R_1$, $R_2$, $R_3$, $R_4$, $R_5$ et X ont la définition donnée ci-dessus.

Cette réaction peut avoir lieu en masse ou au sein d'un solvant organique (par exemple le cyclohexane), avec élimination de l'eau à la température du reflux du solvant utilisé.

Selon ce procédé de synthèse on fait réagir les produits de départ de formules (3) et (4) suivant un rapport molaire (3)/(4) compris entre 0,01 à 100, de préférence entre 0,1 et 10, et encore plus préférentiellement entre 0,5 et 1,5.

En outre on utilise le composé (2) de façon que le rapport molaire (2)/{(3) + (4)} soit compris entre 1/1 et 1/2,5.

Le procédé selon l'invention est mis en oeuvre par simple mélange des produits de départ (2), (3) et (4) dans un réacteur fermé à l'abri de l'humidité de l'air avec élimination de l'eau. La réaction peut avoir lieu dès la température ambiante. Il est toutefois souhaitable de porter la température du mélange réactionnel à une valeur généralement comprise entre 70 et 120°C pour accélérer la cinétique de réaction et/ou pour éliminer l'eau formée et/ou pour solubiliser un produit de départ qui est à l'état solide, à température ambiante.

L'eau formée peut être éliminée par tout moyen connu notamment par distillation du mélange réactionnel sous une pression réduite comprise entre 0,01 et 10 KPa pendant une durée qui dépend de la qualité du vide utilisé.

L'eau formée peut être également éliminée par distillation azéotropique à la température de reflux du solvant utilisé.

Selon une variante de l'invention on peut effectuer la réaction des produits de formule (2), (3), (4) non pas en une seule étape mais en deux étapes.

Au cours de la première étape on fait réagir l'oxyde d'étain de formule (2) sur l'acide de formule (4) pour obtenir, après élimination de l'eau formée, un distannoxane de formule (5) :

$$XR_1R_2\ Sn\ O\ Sn\ R_1R_2X \quad (5)$$

dans laquelle X, $R_1$ et $R_2$ ont la signification donnée ci-dessus.

Au cours de la seconde étape on fait réagir le distannoxane de formule (5) sur le composé β-dicarbonyle de formule (3) et l'on obtient le mélange réactionnel désiré après élimination de l'eau formée comportant le mono-chelate d'étain de formule (1).

Les conditions de mise en oeuvre de ces deux étapes sont analogues à celles utilisables pour le procédé en une seule étape.

Le rapport molaire (2)/(4) est, de préférence égal ou très voisin de 1 et le rapport molaire de (5)/(3) est généralement compris entre 1 et 1,5.

Comme exemples concrets d'oxydes d'étain de formule (2) utilisables on peut citer l'oxyde de diméthylétain, l'oxyde de diéthylétain, l'oxyde de dipropylétain, l'oxyde de dibutylétain, l'oxyde de di(éthyl-2 hexyl)étain, l'oxyde de dilaurylétain, l'oxyde de dipropénylétain, l'oxyde de diphénylétain, l'oxyde de ditolylétain, l'oxyde de méthyléthylétain, l'oxyde de phénylbutylétain.

A titre d'exemples de composés β-dicarbonyle, β-dicétones et β-cétoesters de formule (3) utilisables dans le procédé selon l'invention on peut citer : l'heptanedione-2,4 ; la décanedione-2,4 ; la méthyl-2 décène-2-dione-6,8 ; la méthyl-2 nonène-2 dione-6,8 ; la stéaroyl-1 octanone-2 ; le triacétylméthane ; le dioxo-7,9 décanoate d'éthyle ; la benzoylacétone ; la benzoyl-1 octanone-2 ; la diphényl-1,4 butanedione-1,3 la stéaroylacétophénone ; la palmitoylacétophénone ; la benzoyl-1 méthyl-4 pentanone-2 ; le benzoyl-octacosanoyl-méthane ; le bis(dioxo-2,4 butyl)-1,4 benzène ; le paraméthoxybenzoyl-stéaroyl-méthane ; l'allyl-2 phényl-1 butanedione-1,3 ; le méthyl-2 acétyl-2 acétaldéhyde ; le benzoylacétaldéhyde ; l'acétoacétyl cyclohexène-3 ; le bis(dioxo-2,6 cyclohexyl)méthane ; l'acétyl-2 oxo-1 tétrahydro-1,2,3,4 naphtalène ; le palmitoyl-2 oxo-1 tétrahydro-1,2,3,4 naphtalène ; l'oxo-1 stéaroyl-2 tétrahydro-1,2,3,4 naphtalène ; l'acétyl-2 cyclohexanone-1 ; la benzoyl-2 cyclohexanone-1 ; l'acétyl-2 cyclohexanedione-1,3 ; le dibenzoylméthane ; le tribenzoylméthane; le bis(paraméthoxybenzoyl)méthane ; la (N-phénylcarbamoyl)-1 benzoyl-1 acétone ; la (N-phénylcarbamoyl)-1 acétyl-1 acétone ; l'acétylacétate d'éthyle ; l'acétylacétone et la trifluoro-1,1,1 benzoyl-3 acétone.

Ces diverses β-dicétones de formule (3) sont préparées habituellement par des procédés connus, tels que ceux décrits dans "ORGANIC REACTIONS" par R. ADAMS and Al. (Edition 1954, volume VIII, pages 59 et suivantes). Certaines synthèses plus spécifiques sont décrites dans "REC. TRAV. CHIM. PAYS-BAS" (1897), volume 16, pages 116 et suivantes par M.J. KRAMERS, dans "J. CHEM. SOC" (1925) volume 127, pages 2 891 et suivantes par G.T. MORGAN et Al. ou dans "J. CHEM. SOC" (1941), pages 1582 et suivantes par R. ROBINSON et E. SEIJO.

Comme exemples concrets d'acides de formule (4) utilisables dans le cadre de la présente invention, on peut citer :

— les acides saturés tels que l'acide formique, acétique, propionique, butyrique, isobutyrique, valérique, isovalérique, pivalique, laurique, éthyl-2 hexanoïque, myristique, palmitique et stéarique et les acides versatiques® qui sont des mélanges d'acides monocarboxyliques tertiaires saturés ayant au total le même nombre d'atomes de carbone généralement compris entre 8 et 12.

— les acides insaturés tels que l'acide acrylique, propiolique ($CH = C - COOH$), méthacrylique, crotonique, isocrotonique, oléique et maléique.

— les acides carbocycliques tels que l'acide benzoïque, phtalique, isophtalique et téréphtalique.

— les diacides organiques peuvent être également utilisés.

Le mono-chelate de formule (1) peut être obtenu pratiquement pur ou en équilibre avec les produits de départ et/ou des sous-produits de la réaction et, dans ce cas, on a mis en évidence conformément à l'invention que le mélange réactionnel à l'équilibre est utilisable, en quantité catalytiquement efficace pour durcir les bases silicones.

On trouve que par la R.M.N.$^{119}$Sn le mélange réactionnel à l'équilibre comporte en général en plus du monochelate pentacoordiné $R_1 R_2 Sn CX$, du distannoxane $XR_1 R_2 Sn OSn R_1 R_2 X$, du dicarboxylate ou un dihalogénure de diorganoétain $R_1 R_2 Sn X_2$, et du bischélate de diorganoétain $R_1 R_2 Sn C_2$ comme composé de l'étain. Quand on utilise un rapport molaire des produits de départ (3)/(4) compris entre 0,5 et 1,5 et un rapport molaire (2)/[(3) + (4)] compris entre 1/1 et 1/2,5 les teneurs en % molaire calculées en atome-gramme d'étain métal des constituants du mélange réactionnel sont en principe :

| | |
|---|---|
| $R_1 R_2 Sn CX$ | 30 à 95 |
| $R_1 R_2 Sn X_2$ | 30 à 5 |
| $R_1 R_2 Sn C_2$ | 30 à 0 |
| $X R_1 R_2 Sn OSn R_1 R_2 X$ | 10 à 0 |

Dans ce qui suit ou ce qui précède, sauf mentions contraires, les pourcentages et parties sont en poids.

Le mono-chelate de formule (1) ou le mélange réactionnel à l'équilibre, dénommés par la suite catalyseur à l'étain selon l'invention, est stable au stockage, en récipient fermé, à la température ambiante.

Il est utilisé pour permettre ou faciliter le durcissement en élastomère silicone, dès la température ambiante, de base organopolysiloxane.

Ces bases durcissant (réticulant) par des réactions de polycondensation sont bien connues. Après avoir été catalysées le plus souvent par un dérivé métallique d'un acide carboxylique, elles sont utilisées pour la fabrication de joints, de révêtements hydrofuges, de moules, de produits d'enrobage, pour le collage et l'assemblage de matériaux les plus divers, l'enduction de fibres organiques et minérales, etc.....

Ces bases sont décrites en détail en particulier dans de nombreux brevets et elles sont disponibles dans le commerce.

Ces bases silicones peuvent être mono-composantes, c'est-à-dire conditionnées en un seul emballage, c'est-à-dire stables au stockage en l'absence d'humidité et durcissables en présence d'humidité, en particulier d'humidité apportée par l'air ambiant ou par de l'eau générée au sein de la base lors de son emploi.

Ces bases mono-composantes son généralement de trois types comme décrit plus en détail ci-dessous et sont catalysées par l'incorporation d'une quantité catalytiquement efficace de mono-chelate de formule (1) ou du mélange à l'équilibre contenant le produit de formule (1). Cette quantité catalytiquement efficace est de l'ordre de 0,0001 à 5, de préférence de 0,01 à 3 parties pour 100 parties de la base mono-composante.

En dehors des bases mono-composantes peuvent être utilisées des bases bi-composantes, c'est-à-dire conditionnées en deux emballages, qui durcissent dès l'incorporation du catalyseur à l'étain. Elles sont conditionnées en deux fractions séparées, l'une des fractions pouvant ne renfermer par exemple que le catalyseur à l'étain ou le mélange du catalyseur avec l'agent réticulant.

La quantité catalytiquement efficace de catalyseur à l'étain est de l'ordre de 0,01 à 10 parties, de préférence de 0,1 à 5 parties pour 100 parties de la base bi-composante.

Comme déjà indiqué ci-dessus les bases silicones mono-composantes et bi-composantes durcissant (réticulant) par des réactions de polycondensation sont décrites en détail dans la littérature et sont disponibles dans le commerce.

Ces bases sont généralement préparées à partir des constituants suivants :

A. — 100 parties d'un polymère α-ω dihydroxypolydiorganosiloxane, de viscosité 500 à 1 000 000 mPa.s à 25°C formé d'une succession de motifs $(R_2)SiO$ où les symboles R, identiques ou différents, représentent des radicaux hydrocarbonés ayant de 1 à 10 atomes de carbone, éventuellement substitués par des atomes d'halogène ou des groupes cyano.

B. — 0,5 à 20 parties d'un agent réticulant, choisi parmi les composés organosiliciés portant plus de deux groupes hydrolysables liés aux atomes de silicium, par molécule.

C. — 0 à 250 parties de charges minérales.

D. — 0 à 20 parties d'un agent d'adhérence.

Le radical R est choisi généralement parmi les radicaux méthyle, éthyle, propyle, phényle, vinyle et trifluoro-3,3,3 propyle, 80% au moins des groupes R étant méthylé.

Un premier type de formule mono-composante résulte du mélange du polymère A avec un agent réticulant B qui est un silane de formule :

$$R_a\,Si(Z)_{4-a} \quad (6)$$

dans laquelle R a la définition donnée ci-dessus pour le polymère A et Z est un groupe hydrolysable généralement choisi parmi les groupes amino-N substitué, amido-N substitué, aminoxy-N,N disubstitué, cétiminoxy, aldiminoxy, alcoxy, alcoxyalkylènoxy, énoxy, acyloxy, a représente 0 ou 1.

Des bases mono-composantes de ce type sont décrites en détail, en particulier dans les demandes de brevets européens EP-A-141685 et EP-A-147323, citées comme référence.

Les compositions les plus courantes sont celles pour lesquelles Z est un groupe acyloxy et cétiminoxy qui sont décrites plus en détail en particulier dans la demande de brevet européen EP-A-102268, citée comme référence.

Des compositions coulantes bi-composantes, pour lesquelles Z est un groupe acyloxy, et dont la réticulation est accélérée par addition d'hydroxyde alcalino-terreux ou de phosphate sont décrites dans les demandes de brevet européen EP-A-118325 et EP-A-117772, citées comme référence.

Suivant un deuxième type de base mono-composante on part non pas du mélange de A et B mais du produit de réaction $A_1$ de A sur B. En général, le groupe hydrolysable est un groupe alcoxy et la composition comporte en outre pour 100 parties de polymère fonctionalisé $A_1$, de 0 à 15 parties d'agent réticulant B.

La réaction de A sur B peut avoir lieu en présence de divers catalyseurs tels qu'une amine organique (brevet américain US-A-3542901), un dérivé organique du titane (brevet américain US-A-4111890), d'un carbamate (demande de brevet européen EP-A-210402) et une hydroxylamine N-N disubstituée (demande de brevet européen EP-A-70786).

A ces bases mono-composantes peuvent être ajoutés des agents d'adhérence D choisis parmi les composés organosiliciés portant à la fois, d'une part, des groupes organiques substitués par des radicaux choisis dans le groupe des radicaux amino, uréido, isocyanate, époxy, alkènyle, isocyanurate, hydantoyle, guanidino et mercaptoester et, d'autre part des groupes hydrolysables, en général des groupes alcoxy liés aux atomes de silicium. Des exemples de tels agents d'adhérence sont décrits dans les brevets américains US-A-3517001, US-A-4115356, US-A-4180642, US-A-4273698, US-A-4356116 et dans les demandes de brevets européens EP-A-31996 et EP-A-74001.

Un troisième type de bases mono-composantes sont celles préparées par mélange de 100 parties de polymère A, de 0,5 à 20 parties d'agent réticulant B qui est un polyalcoxysilane (formule 4), Z = alcoxy ou alcoxyalkylèneoxy, de 0 à 250 parties de charges minérales et de 0,5 à 15 parties d'un composé $D_1$ choisi parmi :

— $D_{1-a}$ une amine organique primaire ayant un pKb en milieux aqueux inférieur à 5, un aminoorganosilane et un aminoorganopolysiloxane portant par molécule au moins un groupe organique en $C_1$-$C_{15}$ lié par une liaison Si-C à l'atome de silicium et substité par au moins un radical amino, et au moins un radical alcoxy en $C_1$-$C_5$ ou alcoxy alkylèneoxy en $C_3$-$C_6$.

— $D_{1-b}$ un dérivé organique du titane et du zirconium porteur de groupe organoxy et/ou β-dicétonato.

Des bases mono-composantes comportant $D_{1-a}$ sont décrites dans la demande de brevet européen EP-A-21859 et comportant $D_{1-b}$ sont décrites dans les brevets français FR-A-2121289 et FR-A-2121631, cités comme référence.

Les bases bi-composantes sont formées par mélange de :

a) — 100 parties de polymère (A),

b) — 1 à 20 parties d'un agent réticulant choisi parmi :

- un silane de formule (6) ci-dessus,
- les produits d'hydrolyse partielle du silane de formule (4).

c) — 0 à 150 parties de charges minérales.

d) — 0 à 20 parties d'un agent d'adhérence.

Ces compositions sont bien connues, elles sont en particulier décrites dans les demandes de brevets européens EP-A-10478, EP-A-50358, EP-A-184966 et dans les brevets américains US-A-3801572 et US-A-3888815, cités comme référence.

Comme agent d'adhérence, on peut utiliser les silanes D utilisés pour les bases mono-composantes ainsi que les silanes porteurs d'un groupe morpholino (EP-A-184966) ou d'un radical organique comportant un atome d'azote tertiaire (US-A-3801572 et US-A-3888815).

Les produits d'hydrolyse partielle des alcoxysilanes de formule (4), appelés habituellement polysilicates d'alkyle sont des produits bien connus qui possèdent la propriété de se dissoudre dans les solvants hydrocarbonés usuels tels que le toluène, le xylène, le cyclohexane, le méthylcyclohexane ; le produit le plus couramment utilisé est le polysilicate d'éthyle 40® ayant une teneur en silice du 40%, valeur obtenue après hydrolyse totale des radicaux éthoxy.

Pour les bases mono- et bi-composantes, on utilise comme charges minérales c) des produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 $m^2/g$.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1126884, FR-A-1136885, FR-A-1236505, brevet anglais GB-A-1024234). Les charges traitées renferment, dans la plupart des cas, de 3 à 30% de leur poids de composés organosiliciques.

Les charges peuvent être constituées d'un mélange de plusieurs types de charges de granulométrie différente ; ainsi par exemple, elles peuvent être constituées de 30 à 70% de silices finement divisées de surface spécifique BET supérieure à 40 $m^2/g$ et de 70 à 30% de silices plus grossièrement divisées de surface spécifique inférieure à 30 $m^2/g$.

Le catalyseur à l'étain selon l'invention est plus particulièrement performant pour les bases silicones mono- et bi-composantes ou l'agent réticulant (B) de formule (6) présente des radicaux Z, identiques ou différents, choisis parmi des radicaux alcoxy et alcoxyalkylènoxy de formules $R_7O$ et $R_7OTO$ dans lesquelles $R_7$ est un radical alkyle en $C_1$-$C_4$ et T représente un groupe alkylène en $C_2$-$C_4$.

En outre dans le cas où la base silicone est bi-composante on peut utiliser le produit de l'hydrolyse partielle de l'agent réticulant (B).

Outre les constituants fondamentaux des bases mono-composantes et bi-composantes, c'est-à-dire (1) les polymères diorganopolysiloxanes (A) et/ou ($A_1$) bloqués en fin de chaîne par un radical hydroxylé et/ou des radicaux alcoxyles, (2) les agents réticulants organosiliciques (B) portant des groupes hydrolysables (3) les charges minérales et (4) les agents d'adhérence (D), d'autres ingrédients peuvent être introduits.

Parmi ces ingrédients figurent des composés organosiliciques, principalement des polymères, qui ont la faculté d'agir sur les caractéristiques physiques des compositions conformes à l'invention (formées par mélange des bases avec le catalyseur à l'étain) et/ou sur les propriétés mécaniques des élastomères silicones issus de ces compositions.

Ces composés sont bien connus, ils comprennent par exemple :

— des polymères α-ωbis(triorganosiloxy)diorganopolysiloxanes de viscosité d'au moins 10 mPa.s à 25°C dont les radicaux organiques liés aux atomes de silicium sont choisis parmi les radicaux méthyle, vinyle, phényle, de préférence au moins 80% des radicaux sont des radicaux méthyle et au plus 3 sont des radicaux vinyle ; de préférence sont utilisées des huiles α,ω-bis(triméthylsiloxy)diméthylpolysiloxanes de viscosité 10 mPa.s à 25°C à 1 500 mPa.s à 25°C.

— des polymères méthylpolysiloxanes ramifiés, liquides, renfermant de 0,1 à 8% de groupes hydroxyle liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$, de 0,01 à 0,15 et à un rapport $CH_3SiO_{1,5}/(CH_3)_2SiO$, de 0,1 à 1,5.

— des huiles α-ωdi(hydroxy)diméthylpolysiloxanes de viscosité 10 à 300 mPa.s à 25°C et des huiles α-ωdi(hydroxy)méthylphénylpolysiloxanes de viscosité 200 à 5000 mPa.s à 25°C.

— du diphénylsilanediol, du tétraméthyl-1,1,3,3 disiloxanediol.

Les polymères α-ω bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes (A) ou ($A_1$). Comme exemples concrets de ces composés organiques peuvent être mentionnés les huiles minérales, les coupes pétrolières et les polyalkylbenzènes obtenus par alkylation du benzène à l'aide d'oléfines à longue chaîne, en particulier les oléfines à 12 atomes de carbone issues de la polymérisation du propylène. Des composés organiques de ce type figurent par exemple dans les brevets français FR-A-2392476 et FR-A-2446849.

Chacun des composés organosiliciques ci-avant peut être utilisé à raison de 1 à 150 parties, de préférence 3 à 75 parties, pour 100 parties de diorganopolysiloxanes (A) ou ($A_1$).

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes (A) ou ($A_1$).

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes (A) ou ($A_1$) et les charges (C) et d'ajouter ensuite à l'empâtage obtenu les réticulants (B), les composés (D) et le catalyseur à l'étain.

Il est également possible de mélanger les polymères (A) ou ($A_1$), les réticulants (B), les composés (D) et d'ajouter ultérieurement les charges (C) et le catalyseur à l'étain. Au cours de ces opérations, les mélanges peuvent être chauffés à une température comprise dans l'intervalle 50-180°C sous la pression atmosphérique ou sous une pression réduite afin de favoriser le départ de matières volatiles telles que de l'eau, des polymères de bas poids moléculaire.

Les compositions ainsi préparées peuvent être utilisées telles quelles ou sous la forme de dispersion dans des diluants organiques. Ces diluants sont, de préférence, des produits usuels commercialisés, choisis parmi:

— les hydrocarbures aliphatiques, cycloaliphatiques, aromatiques, halogénés ou non, tels que le n-heptane, le n-octane, le cyclohexane, le méthylcyclohexane, le toluène, le xylène, le mesitylène, le cumène,

la tétraline, la décaline, le perchloroéthylène, le trichloroéthane, le tétrachloroéthane, le chlorobenzène, l'orthodichlorobenzène.

— les cétones aliphatiques et cycloaliphatiques telles que la méthyléthylcétone, la méthylisobutylcétone, la cyclohexanone, l'isophorone.

— les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxanes de départ. Elles peuvent donc varier dans de larges proportions ; néanmoins il est recommandé de fabriquer des dispersions contenant de 15 à 85% en poids de diluants.

Les compositions mono-composantes, conformes à l'invention, utilisées telles quelles, c'est-à-dire non diluées, ou sous forme de dispersions dans des diluants, sont stables au stockage en l'absence d'eau et durcissent dès la température ambiante (après départ des solvants dans le cas des dispersions) en présence d'eau pur former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur.

La formation complète de la peau, qui se traduit par un toucher non collant de la surface, demande une période de temps pouvant être comprise dans l'intervalle allant de 1 minute à 55 minutes ; cette période dépend du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 20 heures.

Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les dispersions précitées de ces compositions dans les diluants sont utilisables pour l'imprégnation en couches minces de produits et articles minéraux, synthétiques, organiques, métalliques, tissés ou non-tissés, l'enduction de feuilles en métal ou en matières plastiques ou cellulosiques. Le dépôt peut avoir lieu par exemple au trempé ou par pulvérisation ; dans ce dernier cas, on se sert d'un pistolet à peintures qui permet l'obtention de revêtements homogènes d'épaisseur 5 à 300 µm. Après la projection des dispersions, les diluants s'évaporent et les compositions libérées durcissent en un film caoutchouteux.

La fabrication des compositions bi-composantes conformes à l'invention s'effectue également par mélange des divers constituants dans des appareils appropriés. Pour obtenir des compositions homogènes, il est préférable de mélanger tout d'abord les polymères (A) avec les charges (C) ; l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants (B), le dérivé organique de l'étain et éventuellement des additifs et adjuvants divers et même de l'eau.

De telles compositions ne sont pas stables au stockage, elles doivent donc être employées rapidement par exemple dans un laps de temps de 40 minutes.

Les additifs et adjuvants divers sont les mêmes que ceux introduits dans les compositions mono-composantes. En particulier il faut mentionner de nouveau les polymères α-ωbis(triorganosiloxy)diorganopolysiloxanes de viscosité d'au moins 10 mPa.s à 25°C dont les radicaux organiques liés aux atomes de silicium sont choisis parmi les radicaux méthyle, vinyle, phényle. Généralement sont utilisées des huiles α-ω(triméthylsiloxy)diméthylpolysiloxanes de viscosité de préférence 20 mPa.s à 25°C à 1000 mPa.s à 25°C, à raison d'au plus 150 parties pour 100 parties de polymère (A).

Pour favoriser le durcissement des compositions bi-composantes, utilisées en couches épaisses, dont l'épaisseur est par exemple supérieure à 2 cm, il est recommandé d'introduire de l'eau à raison d'au plus 1 partie pour 100 parties des polymères (A).

Cet apport d'eau n'est pas nécessaire si les charges (C) en contiennent suffisamment. Pour faciliter son incorporation, l'eau est de préférence ajoutée sous forme d'une dispersion au sein d'un empâtage constitué par exemple des huiles α-ωbis(triorganosiloxy)diorganopolysiloxanes précitées et des charges (C).

Les compositions bi-composantes ne peuvent donc renfermer, pour le conditionnement et le stockage, tous

les constituants fondamentaux, c'est-à-dire les polymères (A), le réticulant (B), les charges (C) et le catalyseur à l'étain (E). Sur le plan industriel, elles doivent être fabriquées sous la forme de deux composants, l'un et l'autre étant stables au stockage.

Un premier composant, stable au stockage, peut comporter par exemple les constituants (A), (B) et (C) ; il est préparé, de préférence, par introduction des agents réticulants (B) dans le mélange homogène formé par malaxage des polymères (A) avec les charges (C).

Le deuxième composant comprend alors le catalyseur à l'étain.

D'autres modalités de présentation des compositions bi-composantes peuvent être retenues ; par exemple un premier composant contenant les polymères (A) et les charges (C) et un deuxième composant contenant les agents réticulants (B) et le catalyseur à l'étain.

Il est préférable dans de nombreuses applications que les deux composants soient l'un et l'autre suffisamment fluides de manière à former aisément lors de leur mélange des compositions dont la viscosité s'échelonne par exemple de 10000 à 800000 mPa.s à 25°C.

Ces compositions qui restent suffisamment fluides pendant au moins 40 minutes, de préférence pendant au moins 80 minutes, après le mélange des deux composants, sont utilisables plus spécialement pour la fabrication de moules en élastomères silicones ; elles peuvent cependant être utilisées pour d'autres applications comme l'enrobage de matériels électroniques et l'enduction de surfaces métalliques ou de matières textiles ou cellulosiques.

Les moules fabriqués sont destinés à reproduire des pièces en matériaux cellulaires ou non, constitués de polymères organiques. Parmi ces matériaux peuvent être cités les polyuréthannes, les polyesters, les polyamides, le polychlorure de vinyle. Il est toutefois recommandé d'utiliser ces moules pour la reproduction de pièces en polyuréthanne, étant donné qu'ils résistent bien à l'attaque des constituants des mélanges (en particulier des polyisocyanates) conduisant aux matériaux en polyuréthanne.

L'introduction du catalyseur à l'étain conforme à l'invention, constitué au moins partiellement de mono-chelate d'étain permet d'atteindre des conditions de mises en oeuvre optimum pour les compositions mono- et bi-composantes. Elle permet ensuite d'obtenir des élastomères ayant des propriétés de mise en oeuvre stables et ayant des propriétés dynamométriques stables dans le temps indépendantes de l'âge et des conditions de conservation des compositions.

— EXEMPLE 1 :

Dans un ballon tricol de 250 ml muni d'un agitateur central, d'un réfrigérant et d'un thermomètre, on introduit successivement 0,1 mole d'oxyde de dibutylétain, 0,1 mole (20,1 g) d'acide laurique, 21, 33 g de benzoyl-1 méthyl-4 pentanone-2 et 130 ml de cyclohexane.

On chauffe à reflux le mélange pendant 2 heures sous atmosphère d'azote puis on distille la plus grande partie du cyclohexane jusqu'à 90°C dans la masse réactionnelle.

On recueille 100 ml de cyclohexane et 2 ml d'eau.

On concentre ensuite le milieu réactionnel à l'évaporateur rotatif pendant 30 minutes à 70°C sous 0,27 Kpa et on obtient 65 g d'un liquide jaune clair contenant 53% molaire (calculés en atome-gramme étain métal) de mono-chelate d'étain pentacoordiné déterminés par RMN $^{119}$ Sn suivant la méthode précitée décrite par Peter J. SMITH.

— EXEMPLES 2 A 16 :

On répète exactement le mode opératoire de l'exemple 1, sauf que l'on change les réactifs et/ou les quantités introduites.

Les résultats obtenus sont rassemblés dans le tableau 1 ci-après.

La réaction peut être schématisée comme suit :

$$_a R_1 R_2 SnO + _b XH + _c CH \rightleftarrows R_1 R_2 Sn\,CX + R_1 R_2 Sn\,C_2 + R_1 R_2 Sn\,X_2 + H_2O$$

a, b et c sont les quantités molaires introduites respectivement de $R_2SnO$, XH et CH,

XH est l'acide introduit,

XH1 : acide laurique,
XH2 : acide versatique®,
XH3 : $(CH_3)_3$ CCOOH acide (pivalique),
XH4 : acide éthyl-2 hexanoïque,

XH5 : acide acétique,
XH6 : acide benzoïque,
XH7 : acide chloroacétique
CH1 : benzoyl-1 méthyl-4 pentanone-2,
CH2 : acétylacétone,
CH3 : dibenzoylméthane,
CH4 : trifluoro-1,1,1 benzoyl-3 acétone,

Dans le tableau 1, les colonnes PR1, PR2, PR3 et PR4 donne les % molaires calculés en atome-gramme d'étain métal pour les produits présents dans le mélange réactionnel.

PR1 : R1 R2 Sn CX
PR2 : R1 R2 Sn X2
PR3 : R1 R2 Sn C2
PR4 : X R1 R2 Sn OSn R1 R2 X

TABLEAU 1

| ex. | R1 et R2 | a | XH | b | CH | c | PR1 | PR2 | PR3 | PR4 |
|---|---|---|---|---|---|---|---|---|---|---|
| 1 | C4H9 | 0,1 | XH1 | 0,1 | CH1 | 0,1 | 53,0 | 23,0 | 17,0 | 7,0 |
| 2 | C4H9 | 0,5 | XH1 | 0,5 | CH1 | 0,5 | 51,2 | 22,8 | 20,3 | 5,7 |
| 3 | C4H9 | 0,2 | XH1 | 0,2 | CH1 | 0,23 | 54,8 | 21,0 | 21,0 | 2,2 |
| 4 | C4H9 | 0,2 | XH1 | 0,23 | CH1 | 0,23 | 54,0 | 34,0 | 12,0 | 0 |
| 5 | C4H9 | 0,05 | XH2 | 0,05 | CH1 | 0,05 | 56,0 | 23,0 | 21,0 | 0 |
| 6 | C4H9 | 0,1 | XH3 | 0,1 | CH1 | 0,1 | 56,0 | 20,8 | 20,0 | 3,8 |
| 7 | C4H9 | 0,1 | XH4 | 0,1 | CH1 | 0,1 | 51,0 | 21,4 | 22,5 | 5,1 |
| 8 | C8H17 | 0,1 | XH4 | 0,1 | CH1 | 0,1 | 51,1 | 19,7 | 23,4 | 5,8 |
| 9 | C4H9 | 0,1 | XH5 | 0,1 | CH1 | 0,1 | 49,5 | 18,8 | 28,2 | 3,5 |
| 10 | C4H9 | 0,1 | XH5 | 0,1 | CH2 | 0,1 | 75,0 | 5,8 | 9,7 | 9,5 |
| 11 | C8H17 | 0,015 | XH1 | 0,015 | CH3 | 0,015 | 54,5 | 20,0 | 16,4 | 9,1 |
| 12 | C8H17 | 0,015 | XH1 | 0,020 | CH4 | 0,020 | 35,5 | 44,5 | 20,0 | 0 |
| 13 | C4H9 | 0,1 | XH6 | 0,1 | CH2 | 0,1 | 73,0 | 12,0 | 6,0 | 9,0 |
| 14 | C4H9 | 0,1 | XH6 | 0,1 | CH1 | 0,1 | 69,0 | 12,0 | 14,0 | 5,0 |
| 15 | C8H17 | 0,1 | XH1 | 0,1 | CH1 | 0,1 | 61,0 | 27,0 | 12,0 | 0 |
| 16 | C4H9 | 0,1 | XH7 | 0,1 | CH1 | 0,1 | 90,0 | 4,5 | 0 | 5,20 |

— EXEMPLE 17 :

Dans un ballon tricol de 1 litre équipé d'un agitateur central, d'un réfrigérant et d'un thermomètre on charge 1 mole (360 g) d'oxyde de di n-octyl étain, 1,2 mole (244,8 g) de benzoyl-1 méthyl-4 pentanone-2 et 0,9 mole (129 g) d'acide éthyl-2 hexanoïque.

On obtient une huile limpide jaune, de caractéristiques physico-chimiques suivantes :

viscosité à 25°C : 163 mPa.s
densité à 25°C : 1,081
indice de réfraction à 25°C : 1,521

— EXEMPLES 18 A 20 :

On effectue les mêmes opérations qu'à l'exemple 16, sauf que l'on fait varier les rapports molaires a, b, c des réactifs, les résultats obtenus sont rassemblés dans le tableau 2 ci-après où R1, R2, a, XH, b, CH, C, PR1, PR2, PR3 et PR4 ont la même signification qu'au tableau 1 ci-dessus.

TABLEAU 2

| ex. | R1 et R2 | a | XH | b | CH | c | PR1 | PR2 | PR3 | PR4 |
|---|---|---|---|---|---|---|---|---|---|---|
| 17 | C8H17 | 1 | XH4 | 0,9 | CH1 | 1,2 | 30,4 | 49,0 | 7,6 | 12,0 |
| 18 | C8H17 | 1 | XH4 | 1,5 | CH1 | 0,6 | 49,6 | 15,0 | 23,4 | 10,5 |
| 19 | C8H17 | 1 | XH4 | 1 | CH1 | 1 | 44,0 | 13,0 | 29,5 | 13,5 |
| 20 | C8H17 | 1 | XH4 | 0,6 | CH1 | 1,5 | 33,2 | 7,3 | 47,7 | 11,3 |

— EXEMPLE COMPARATIF 21 ET EXEMPLES 22 A 26 :

On prépare une composition $P_1$ par mélange de :

- — 100 parties d'une huile α-ωdihydroxydiméthylpolysiloxane de viscosité 10000 mPa.s à 25°C,
- — 70 parties d'une huile α-ωbis(triméthylsiloxy)-diméthylpolysiloxane de viscosité 800 mPa.s à 25°C,
- — 55 parties d'une silice de combustion de surface spécifique 300 m²/g traitée par de l'hexaméthyldisilazane,
- — 50 parties de quartz broyé de diamètre particulaire moyen 5 micromètres,
- — 10 parties d'un empâtage formé de 90 parties de l'huile α-ωdihydroxydiméthylpolysiloxane, précédemment citée, de viscosité 10 000 mPa.s à 25°C, 5 parties d'une silice de combustion de surface spécifique 150 m²/g et 5 parties d'eau.

On catalyse la composition $P_1$ avec un système réticulant contenant certains des catalyseurs C faisant l'objet des exemples précédents et du silicate d'éthyle partiellement hydrolysé.

On catalyse la composition $P_1$ en mélangeant 100 parties de cette composition avec deux parties du système réticulant constitué de 17,5% en poids de catalyseur C et 82,5% en poids de silicate d'éthyle partiellement hydrolysé. Ce système réticulant est utilisé tel quel, fraîchement préparé (Δt = 0) ou bien après avoir subi un vieillissement à 70°C pendant une durée Δt de 72, 168 et 336 heures.

On détermine ensuite le temps d'étalement te de la composition catalysée en notant la durée pendant laquelle cette composition présente un état suffisamment fluide pour s'étaler sous son propre poids et ainsi prendre la configuration du volume interne des récipients dans lesquels elle est versée.

Le test mis en oeuvre pour apprécier la faculté d'étalement est le suivant :

La composition fraîchement catalysée (15 grammes) est versée dans une capsule en aluminium, de forme cylindrique de diamètre 4 cm ; elle doit présenter, après une période d'au plus 5 minutes, une surface parfaitement horizontale.

La composition catalysée se transforme au bout de plusieurs heures à la température ambiante en un élastomère silicone ; 24 heures, (1 jour) et 96 heures (4 jours) après la préparation de cette composition catalysée, on mesure la dureté Shore A de l'élastomère formé. Les résultats concernant les temps d'étalement (te) en minutes et les duretés Shore A (DSA1 et DSA4) sont rassemblés dans le tableau 3 ci-après.

Le catalyseur de l'exemple comparatif est le di(éthyl-2 hexanoate) de di n-octyl étain.

Les résultats sont rassemblés dans le tableau 3 ci-après où C ex n indique que le catalyseur à l'étain utilisé est celui obtenu à l'exemple n.

On constate que les catalyseurs selon l'invention, à la différence du catalyseur témoin, confèrent à l'élastomère silicone des duretés et des temps d'étalement satisfaisants même après vieillissement prolongé du système réticulant.

TABLEAU 3

| EXEMPLE | | 21 | | | 22 | | | 23 | | |
|---|---|---|---|---|---|---|---|---|---|---|
| CATALYSEUR | | TEMOIN | | | C ex 8 | | | C ex 17 | | |
| | | te | DSA1 | DSA4 | te | DSA1 | DSA4 | te | DSA1 | DSA4 |
| Δt | 0 | 170 | 16 | 26 | 240 | 12 | 24 | 170 | 15 | 25 |
| | 72 | 210 | 12 | 24 | | | | 180 | 16 | 26 |
| | 168 | 290 | 6 | 23 | 235 | 13 | 24 | 160 | 14 | 25 |
| | 336 | 310 | 5 | 23 | 200 | 17 | 23 | 170 | 15 | 25 |

TABLEAU 3 (suite)

| EXEMPLE | | 24 | | | 25 | | | 26 | | |
|---|---|---|---|---|---|---|---|---|---|---|
| CATALYSEUR | | C ex 18 | | | C ex 19 | | | C ex 20 | | |
| | | te | DSA1 | DSA2 | te | DSA1 | DSA2 | te | DSA1 | DSA2 |
| Δt | 0 | 170 | 15 | 25 | 240 | 13 | 24 | 150 | 18 | 27 |
| | 72 | 170 | 17 | 25 | | | | 170 | 16 | 24 |
| | 168 | | | | 235 | 13 | 24 | 180 | 16 | 25 |
| | 336 | 230 | 15 | 26 | 200 | 17 | 24 | 200 | 16 | 26 |

— EXEMPLE COMPARATIF 27 ET EXEMPLE 28 :

On répète le mode opératoire des exemples 21 à 26 précédents sauf que le catalyseur utilisé comme témoin dans l'exemple comparatif 27 est le dilaurate de di(n-octyl)étain et le catalyseur de l'exemple 28 est celui synthétisé à l'exemple 15 ci-dessus.

Les résultats obtenus sont rassemblés dans le tableau 4 ci-après.

On constate que le catalyseur utilisé à l'exemple 28, à la différence du catalyseur témoin de l'exemple comparatif 27, confère à l'élastomère silicone des duretés et des temps d'étalement satisfaisants même après vieillissement prolongé.

TABLEAU 4

| EXEMPLE | | 27 | | | 28 | | |
|---|---|---|---|---|---|---|---|
| CATALYSEUR | | TEMOIN | | | C ex 15 | | |
| | | te | DSA1 | DSA2 | te | DSA1 | DSA2 |
| Δ t | 0 | 160 | 17 | 26 | 95 | 20 | 26 |
| | 72 | 195 | 17 | 25 | 95 | 20 | 25 |
| | 144 | 100 | 19 | 27 | 100 | 20 | 25 |
| | 288 | 90 | 18 | 26 | 100 | 20 | 25 |

— EXEMPLE COMPARATIF 29 ET EXEMPLES 30 A 32 :

Ces exemples ont pour but de montrer la meilleure tenue au vieillissement naturel des élastomères obtenus à partir de 100 parties de composition $P_1$ des exemples 21 à 26, catalysées par 5 parties de système réticulant constitué de 17,5% en poids de catalyseur C et 82,5% en poids de silicate d'éthyle partiellement hydrolysé.

On dépose la composition catalysée sur une plaque en polyéthylène, sous la forme d'une couche de 2 mm d'épaisseur. Après une période de repos de 24 heures à l'air ambiant ou démoule la pellicule d'élastomère fournie et on la laisse vieillir à une température de 20°C pendant des durées différentes (en mois).

On mesure la dureté Shore A et la résistance à la déchirure R/D (exprimée en KN/m) de la pellicule ayant subi les périodes de vieillissement précitées.

Les résultats sont rassemblés dans le tableau 5 ci-après ou C ex n indique que le catalyseur à l'étain utilisé est celui obtenu à l'exemple n. Le catalyseur témoin de l'exemple comparatif 29 est le bis(éthyl-2 hexanoate) de di n-octylétain.

TABLEAU 5

| EXEMPLE | CATALYSEUR | DUREE DE VIEILLISSEMENT | | | | | | | | | |
|---|---|---|---|---|---|---|---|---|---|---|---|
| | | 0 MOIS | | 1 MOIS | | 3 MOIS | | 7 MOIS | | 11 MOIS | |
| | C ex n | DAS | R/D | DAS | R/D | DAS | R/D | DAS | R/D | DAS | R/D |
| 29 | TEMOIN | 38 | 25 | 41 | 25 | 42 | 24 | 43 | 15 | 45 | 6 |
| 30 | C ex 18 | 38 | 24 | 40 | 24 | 41 | 24 | 40 | 23 | 43 | 10 |
| 31 | C ex 17 | 35 | 24 | 37 | 21 | 39 | 23 | 38 | 22 | 38 | 23 |
| 32 | C ex 20 | 37 | 24 | 40 | 25 | 41 | 25 | 40 | 23 | 43 | 17 |

Du tableau 5, il apparaît que la meilleure stabilité de l'élastomère est obtenue avec un catalyseur conforme à l'invention.

— EXEMPLE COMPARATIF 33 ET EXEMPLE 34 :

On triture dans un malaxeur :

— 100 parties d'une huile α-ωdihydroxydiméthylpolysiloxane de viscosité 70000 mPa.s à 25°C,

— 20 parties d'une huile bis(triméthylsiloxy)-diméthylpolysiloxane de viscosité 100 mPa.s à 25°C,

— 130 parties de carbonate de calcium, de diamètre particulaire moyen 5 micromètres,

— 10 parties de silice de combustion de surface spécifique 150 $m^2/g$.

Lorsque la masse est homogène, on lui ajoute la totalité de la solution provenant du mélange de :

— 5,5 parties de silane de formule $Si(OCH_2CH_2OC_2H_5)_4$

— 2,5 parties de silane de formule $(CH_3O)_3Si(CH_2)_3NH\text{-}CH_2CH_2NH_2$

— 0,040 partie du dérivé organique de l'étain lequel est préparé selon le mode opératoire de l'exemple 16 ci-dessus.

La composition mono-composante ainsi obtenue est conservée à l'abri de l'humidité dans des tubes étanches en aluminium (exemple 34) ; une autre composition est préparée identique à la précédente sauf que l'on utilise comme dérivé organique de l'étain uniquement le dilaurate de dibutylétain, la quantité utilisée est identique soit 0,040 partie (exemple comparatif 33).

Cette composition est également conditionnée dans des tubes étanches en aluminium. On vérifie la stabilité au stockage des deux compositions ; à cet effet, on abandonne les tubes les contenant pendant 72 heures dans une étuve portée à 100°C.

On laisse refroidir les tubes et étale leur contenu (ainsi que le contenu des tubes n'ayant pas été soumis à une période de chauffage, et présentant une durée de stockage de 1 mois à la température ambiante) sous forme d'une couche de 2 mm d'épaisseur, à l'air libre, sur une plaque en polytétrafluoroéthylène. La couche déposée se transforme en un film caoutchouteux ; 24 heures après le dépôt de la couche, on enlève le film d'élastomère et mesure après vieillissement de 7 jours à la température ambiante, les propriétés dynamométriques des élastomères.

Les résultats sont rassemblés dans le tableau 6 ci-après :

TABLEAU 6

| Propriétés dynamométriques | EXEMPLE 34 | | EXEMPLE 33 | |
|---|---|---|---|---|
| | Contenu des tubes conservés à la température ambiante | Contenu des tubes vieilli 72 heures à 100 °C | Contenu des tubes conservés à la température ambiante | Contenu des tubes vieilli 72 heures à 100 °C |
| Dureté Shore A | 27 | 10 | 26 | - |
| Résistance à la rupture en MPa | 1,1 | 1,0 | 1,0 | - |
| Allongement à la rupture en % | 515 | 450 | 348 | - |

- : non mesurable.

L'examen des valeurs des propriétés dynamométriques montre clairement qu'il est avantageux pour la conservation de ces propriétés dans le temps, d'utiliser le mélange catalytique selon l'invention plutôt que le seul dilaurate de di-n-butylétain.

## Revendications

1. Mono-chelate d'étain de valence IV pentacoordiné de formule :

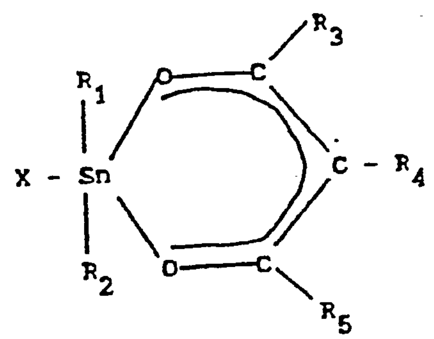

(1)

dans laquelle :

— les symboles $R_1$ et $R_2$, identiques ou différents, représentent des radicaux organiques monovalents hydrocarbonés en $C_1$-$C_{18}$, éventuellement halogénés.

— les symboles $R_3$ et $R_5$, identiques ou différents sont choisis parmi des radicaux $R_1$ et $R_2$, un atome d'hydrogène, des radicaux alcoxy en $C_1$-$C_5$ et des radicaux silyle $Si(R_1)_3$.

— le symbole $R_4$ représente l'atome d'hydrogène, un radical hydrocarboné éventuellement halogéné en $C_1$-$C_8$, ou bien $R_4$ forme avec $R_5$ un radical hydrocarboné cyclique divalent en $C_5$-$C_{12}$ éventuellement substitué par des radicaux chlore, nitro et cyano.

— le symbole X est un radical monocarboxylate de formule $R_6 \cdot COO$ dans laquelle le symbole $R_6$ a la même signification que le symbole $R_1$ ci-dessus.

2. Procédé de préparation d'un mono-chelate d'étain de formule (1) défini à la revendication 1, par réaction d'un oxyde d'étain de formule :

$$R_1R_2SnO \quad (2)$$

— sur un composé β-dicarbonyle de formule :

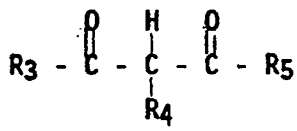 (3)

et d'un acide organique de formule :

$$XH \quad (4)$$

formule dans lesquelles $R_1$, $R_2$, $R_3$, $R_4$, R5 et X on la définition donnée ci-dessus à la revendication 1, et élimination de l'eau formée.

3. Procédé selon la revendication 2, caractérisé en ce qui on fait réagir les produits de départ de formules (3) et (4) suivant un rapport molaire (3)/(4) compris entre 0,01 et 100, de préférence entre 0,1 et 10, et encore plus préférentiellement entre 0,5 et 15.

4. Procédé selon la revendication 3, caractérisé en ce qu'on utilise le composé (2) de façon que le rapport molaire (2)/[(3)+(4)] sont compris entre 1/1 et 1/2,5.

5. Procédé selon l'une quelconque des revendications 2 à 4, caractérisé en ce que ledit procédé est mis en oeuvre par simple mélange des produits de départ (2), (3) et (4) à l'abri de l'humidité de l'air avec élimination de l'eau formée.

6. Procédé selon la revendication 2 ou 3, caractérisé en ce que la réaction à lieu en 2 étapes, au cours de la première étape on fait réagir l'oxyde d'étain de formule (2), sur l'acide de formule (4) pour obtenir, après élimination de l'eau formée, un distannoxane de formule (5) :

$$XR_1R_2\,Sn\,OSn\,R_1R_2X \quad (5)$$

dans laquelle X, $R_1$ et $R_3$ ont la signification donnée ci-dessus à la revendication 1 et, au cours de la deuxième étape ont fait réagir le distannoxane de formule (5), sur le compose β-dicarbonyle de formule (3) avec élimination de l'eau formée.

7. Procédé selon la revendication 6, caractérise en ce que le rapport molaire (2)/(4) est égal ou très voisin de 1 et le rapport molaire (5)/(3) est compris entre 1 et 1,5.

8. Procédé selon l'une quelconque des revendications 2 à 7, caractérisé en ce que la réaction a lieu au sein d'un solvant organique avec élimination de l'eau à la température du reflux du solvant.

9. Composition organopolysiloxane comprenant une base silicone apte à durcir en élastomère silicone par des réactions de polycondensation dès la température ambiante et une quantité catalytiquement efficace d'un catalyseur tel que défini à la revendication 1.

10. Composition organopolysiloxane comprenant une base silicone apte à durcir en élastomère silicone par des réactions de polycondensation dès la température ambiante et une quantité catalyquement efficace d'un catalyseur obtenu par la mise en oeuvre d'un procédé tel que défini à l'une quelconque des revendications 2 à 8.

11. Composition selon la revendication 9 ou 10, caractérisée en ce que la base silicone comporte :

A — 100 parties en poids d'un polymère α, ω dihydroxypolydiorganosiloxane, de viscosité 500 à 1000000 mPa. s formé d'une succession de motifs $(R_2)$Sio où les symboles R, identiques ou différents, représentent des radicaux hydrocarbonés ayant de 1 à 10 atomes de carbone, éventuellement substitués par des atomes d'halogènes ou des groupes cyano.

B — 0,5 à 20 parties en poids d'un agent réticulant, choisi parmi les composés organosiliciés portant plus de deux groupes hydrolysables liés aux atomes de silicium, par molécule.

C — 0 à 250 parties en poids de charges minérales.

D — 0 à 20 parties en poids d'un agent d'adhérence.

12. Composition selon la revendication 11, caractérisée en ce que l'agent réticulant (B) est un silane de formule :

$$R_a\,Si(Z)_{4-a} \quad (6)$$

dans laquelle R est un radical hydrocarboné ayant de 1 à 10 atomes de carbone et Z est choisi parmi les groupes amino-N subsistué, aminoxy-N, N disubstitué, cétiminoxy, alcoxy, alcoxyalkylénoxy, enoxy et acyloxy et a est 0 ou 1.

## Patentansprüche

1. Pentakoordiniertes Zinnmonochelat mit der Wertigkeit IV der Formel

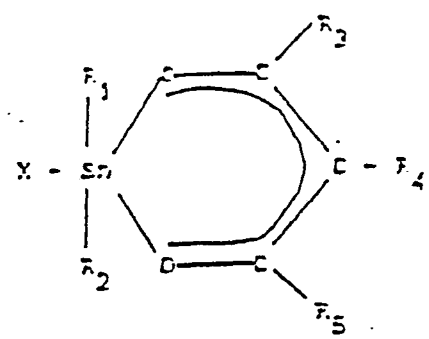

(1)

worin

— die Symbole $R_1$ und $R_2$, die gleich oder verschieden sind, für gegebenenfalls halogenierte, einwertige, organische $C_{1-18}$-Kohlenwasserstoffreste stehen,

— die Symbole $R_3$ und $R_5$, die gleich oder verschieden sind, unter den Resten $R_1$ und $R_2$, einem Wasserstoffatom, den $C_{1-5}$ -Alkoxyresten und den Silylresten $Si(R_1)_3$ ausgewällt sind,

— das Symbol $R_4$ ein Wasserstoffatom, einen gegebenenfalls halogenierten $C_{1-8}$-Kohlenwasserstoffrest bedeutet oder $R_4$ mit $R_5$ einen zweiwertigen, cyclischen $C_{5-12}$-Kohlenwasserstoffrest bildet, der gegebenefalls durch Chlor-, Nitro- und Cyanogruppen substituiert ist,

— das Symbol X ein Monocarboxylatrest der Formel $R_6$ COO ist, worin das Symbol $R_6$ die gleiche Bedeutung wie das vorstehende Symbol $R_1$ besitzt.

2. Verfaren zur Herstellung eines Zinnmonochelats der Formel (1) gemäß Anspruch 1 durch Umsetzung eines Zinnoxids der Formel

$$R_1R_2SnO \quad (2)$$

mit einer β-Dicarbonylverbindung der Formel

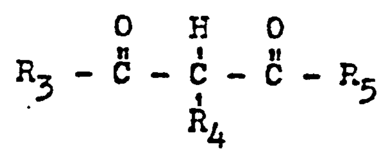

(3)

und einer organischen Säure der Formel

$$XH \quad (4)$$

worin $R_1$, $R_2$, $R_3$, $R_4$, $R_5$ und X die in Anspruch 1 angegebene Bedeutung besitzen, und Entfernung des gebildeten Wassers.

3. Verfahren gemäß Anspruch 2, dadurch gekennzeichnet, daß man die Ausgangsprodukte der Formeln (3) und (4) entsprechend einem Molverhältnis (3)/(4) zwischen 0,01 und 100, vorzugsweise zwischen 0,1 und 10, und insbesondere zwischen 0,5 und 15 umsetzt.

4. Verfahren gemäß Anspruch 3, dadurch gekennzeichnet, daß man die Verbindung (2) derart verwendet, daß das Molverhältnis (2) /[(3) + (4)] zwischen 1/1 und 1/2,5 liegt.

5. Verfahen gemäß einem der Ansprüche 2 bis 4, dadurch gekennzeichnet, daß das Verfahen durch einfaches Mischen der Ausgangsprodukte (2), (3) und (4) unter Ausschluß von Luftfeuchtigkeit unter Eliminierung des gebildeten Wassers durchgeführt wird.

6. Verfahren gemäß Anspruch 2 oder 3, dadurch gekennzeichnet, daß die Umsetzung in zwei Stufen stattfindet, wobei man im Verlauf der ersten Stufe das Zinnoxid der Formel (2) mit der Säure der Formel (4) umsetzt, um nach Entfernung des gebildeten Wassers ein Distannoxan der Formel (5)

$$XR_1R_2Sn\ OSn\ R_1R_2X \quad (5)$$

zu erhalten, worin X, $R_1$ und $R_2$ die in Anspruch 1 angegebene Bedeutung besitzen, und im Verlauf der zweiten Stufe das Distannoxan der Formel (5) mit der β-Dicarbonylverbindung der Formel (3) unter Eliminierung des gebildeten Wassers umsetzt.

7. Verfahren gemäß Anspruch 6, dadurch gekennzeichnet, daß der Molverhältnis (2)/(4) gleich oder sehr ähnlich 1 ist und das Molverhälthnis (5)/(3) zwischen 1 und 1,5 liegt.

8. Verfahren gemäß einem der Ansprüche 2 bis 7, dadurch gekennzeichnet, daß die Umsetzung in einem organischen Lösungsmittel unter Eliminiereung von Wasser bei der Rückflußtemperatur des Lösungsmittels stattfindet.

9. Organopolysiloxan-Zusammensetzung, enthaltend eine Silikonbase, die für die Härtung zu einem Silikonelastomeren durch Polykondensationsreaktionen ab Raumtemperatur geeignet ist, und eine katalytisch wirksame Menge eines Katalysators, wie in Anspruch 1 definiert, umfaßt.

10. Organopolysiloxan-Zusammensetzung, enthaltend eine Silikonbase, die geeignet ist für die Härtung zu einem Silikonelastomeren durch Polykondensationsreaktionen ab Raumtemperatur, und eine katalytisch wirksame Menge eines Katalysators, der nach einem Verfahren, wie in einem der Ansprüche 2 bis 8 definiert, erhalten wurde.

11. Zusammensetzung gemäß Anspruch 9 oder 10, dadurch gekennzeichnet, daß die Silikonbase enthählt :

A — 100 Gew. Teile eine α,ω-Dihydroxypolydiorganosiloxan-Polymeren mit einer Viskosität von 500 bis 1000000 mPa.s, gebildet aus einer Abfolge von Gruppierungen $(R_2)SiO$, worin die Symbole R, die gleich oder verschieden sind, für Kohlenwasserstoffreste mit 1 bis 10 Kohlenstoffatomen stehen, die gegebenenfalls durch Halogenatome oder durch Cyanogruppen substituiert sind ;

B — 0,5 bis 20 Gew. Teile eines Vernetzungsmittels, ausgewählt unter den Organosiliciumverbindungen, die mehr als zwei an Siliciumatome gebundene, hydrolysierbare Gruppen je Molekül enthalten ;

C — 0 bis 250 Gew. Teile mineralische Füllstoffe ;

D — 0 bis 20 Gew. Teile eines Adhäsionsmittels.

12. Zusammensetzung gemäß Anspruch 11, dadurch gekennzeichnet, daß das Vernetzungsmittel (B) ein Silan der Formel

$$R_a\ Si(Z)_{4-a} \quad (6)$$

ist, worin R für einen Kohlenwasserstoffrest mit 1 bis 10 Kohlenstoffatomen steht und Z unter den N-substituierten Amino-, N,N-disubstituierten Aminoxy, Ketiminoxy-, Alkoxy-, Alkoxyalkylenoxy-, Enoxy- und Acyloxygruppen ausgewählt ist und a für 0 oder 1 steht.

## Claims

1. Monochelate of pentacoordinated tin of valency IV, of formula :

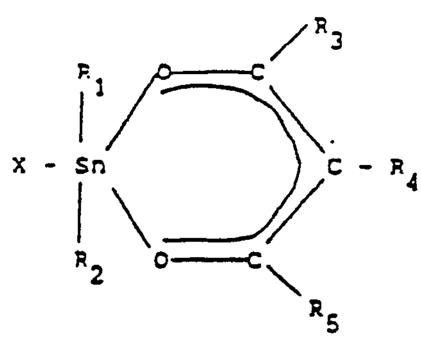

(1)

in which :

— the symbols R1 and R2, which are identical or different, denote optionally halogenated monovalent $C_1$-

$C_{18}$ hydrocarbon organic radicals,

— the symbols $R_3$ and $R_5$, which are identical or different, are chosen from radicals $R_1$ and $R_2$, a hydrogen atom, $C_1$-$C_5$ alkoxy radicals and silyl radicals $Si(R_1)_3$,

— the symbol $R_4$ denotes the hydrogen atom, an optionally halogenated $C_1$-$C_8$ hydrocarbon radical, or else $R_4$ forms with $R_5$ a divalent $C_5$-$C_{12}$ cyclic hydrocarbon radical optionally substituted by chlorine, nitro and cyano radicals, and

— the symbol X is a monocarboxylate radical of formula $R_6 \cdot COO$ in which the symbol $R_6$ has the same meaning as the symbol $R_1$ above.

2. Process for the preparation of a tin monochelate of formula (1) defined in Claim 1, by reaction of a tin oxide of formula :

$$R_1R_2SnO \quad (2)$$

— with a β-dicarbonyl compound of formula :

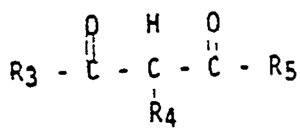

(3)

and of an organic acid of formula :

$$XH \quad (4)$$

in which formula $R_1$, $R_2$, R3, $R_4$, $R_5$ and X have the definition given above in Claim 1, and the removal of the water formed.

3. Process according to Claim 2, characterised in that the starting materials of formulae (3) and (4) are reacted in a molar ratio (3)/(4) of between 0.01 and 100, preferably between 0.1 and 10, and still more preferably between 0.5 and 15.

4. Process according to Claim 3, characterised in that the compound (2) is employed so that the molar ratio (2)/[(3) + (4)] is between 1/1 and 1/2.5.

5. Process according to any one of Claims 2 to 4, characterised in that the said process is carried out merely by mixing the starting materials (2), (3) and (4) while protected against atmospheric moisture, with removal of the water formed.

6. Process according to Claim 2 or 3, characterised in that the reaction takes place in two stages, during the first stage the tin oxide of formula (2) is reacted with the acid of formula (4) to obtain, after removal of' the water formed, a distannoxane formula of (5) :

$$XR_1R_2SnOSn\, R_1R_2X \quad (5)$$

in which X, $R_1$ and $R_3$ have the meaning given above in Claim 1 and, during the second stage the distannoxane of formula (5) is reacted with the β-dicarbonyl compound of formula (3) with removal of the water formed.

7. Process according to Claim 6, characterised in that the molar ratio (2)/(4) is equal to or very close to 1 and the molar ratio (5)/(3) is between 1 and 1.5.

8. Process according to any one of Claims 2 to 7, characterised in that the reaction takes place in an organic solvent with removal of water at the reflux temperature of the solvent.

9. Organopolysiloxane composition comprising a silicone base capable of curing to a silicone elastomer by polycondensation reactions from room temperature upwards and a catalytically effective quantity of a catalyst such as that defined in Claim 1.

10. Organopolysiloxane composition comprising a silicone base capable of curing to a silicone elastomer by polycondensation reactions from room temperature upwards and a catalytically effective quantity of a catalyst obtained by using a process such as that defined in any one of Claims 2 to 8.

11. Composition according to Claim 9 or 10, characterised in that the silicone base comprises :

A — 100 parts by weight of an α,ω-dihydroxypolydiorganosiloxane polymer, with a viscosity of 500 to 1,000,000 mPa s, consisting of a succession of $(R_2)SiO$ units where the symbols R, which are identical or different, denote hydrocarbon radicals containing from 1 to 10 carbon atoms, optionally substituted by halogen atoms or cyano groups,

B — 0.5 to 20 parts by weight of a crosslinking agent chosen from organosilicon compounds bearing more than two hydrolysable groups linked to the silicon atoms, per molecule,

C — 0 to 250 parts by weight of inorganic fillers, and

D — 0 to 20 parts by weight of an adhesion promoter

12. Composition according to Claim 11, characterised in that the crosslinking agent (B) is a silane of formula :

$$R_aSi(Z)_{4-a} \quad (6)$$

in which R is a hydrocarbon radical containing from 1 to 10 carbon atoms and Z is chosen from N-substituted amino, N,N-disubstituted aminoxy, ketiminoxy, alkoxy, alkoxy-alkylenoxy, enoxy and acyloxy groups and a is 0 or 1.